(19) Europäisches Patentamt
European Patent Office
Office européen des brevets

(11) Veröffentlichungsnummer: **0 348 919 A2**

(12) **EUROPÄISCHE PATENTANMELDUNG**

(21) Anmeldenummer: **89111715.2**

(51) Int. Cl.4: **C08G 59/50 , C08G 59/68**

(22) Anmeldetag: **27.06.89**

(30) Priorität: **28.06.88 DE 3821708**

(43) Veröffentlichungstag der Anmeldung: **03.01.90 Patentblatt 90/01**

(84) Benannte Vertragsstaaten: **AT CH DE FR GB IT LI**

(71) Anmelder: **SKW TROSTBERG AKTIENGESELLSCHAFT**
**Dr.-Albert-Frank-Strasse 32**
**D-8223 Trostberg(DE)**

(72) Erfinder: **Hammer, Benedikt, Dr.**
**Franz-Josef-Soll-Strasse 21**
**D-8223 Trostberg(DE)**
Erfinder: **Graml, Bernd**
**Mitterweg 27**
**D-8268 Garching(DE)**

(74) Vertreter: **Huber, Bernhard, Dipl.-Chem. et al**
**Patentanwälte H. Weickmann, Dr. K. Fincke F.A. Weickmann, B. Huber Dr. H. Liska, Dr. J. Prechtel Möhlstrasse 22 Postfach 860 820**
**D-8000 München 86(DE)**

(54) **Additiv für hitzehärtbare Epoxidharzmassen.**

(57) Ein Additiv für hitzehärtbare Epoxidharzmassen enthält Addukte und/oder Umsetzungsprodukte aus
(a) Imidazolen der Formel I

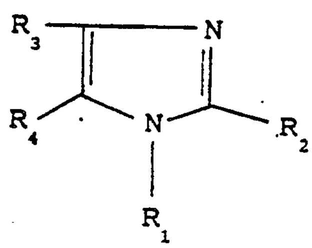

(I)

mit $R_1$, $R_2$, $R_3$ oder $R_4$ = H, Alkyl mit 1 bis 3 C-Atomen, Phenyl und
b) mindestens einer aromatischen Hydroxysäure wie einer Phenol- oder Naphtholsulfonsäure oder besteht daraus. Es eignet sich für die Verwendung als alleiniger Härter oder als Beschleuniger in Kombination mit anderen latenten Härtern.

EP 0 348 919 A2

## Additiv für hitzehärtbare Epoxidharzmassen

Die Erfindung betrifft ein Additiv für hitzehärtbare Epoxidharzmassen, das als Härter oder in Kombination mit bekannten Härtern als Beschleuniger eingesetzt werden kann.

Für lagerstabile Epoxidharzgemische werden bekanntermaßen Urone (Monuron, Diuron, Fenuron etc.) bspw. in Kombination mit Dicyandiamid eingesetzt (vgl. US 3 562 215 sowie US 3 956 237). Nachteilig bei den Uronen sind die aufwendige Herstellung dieser Produkte sowie die Tatsache, daß sie als Beschleuniger die Härtungstemperaturen der Epoxidharzmassen nicht so stark wie gewünscht absenken können.

Weiterhin werden als latente, hochreaktive Härter Imidazolide (N-Acylimidazole) (vgl. DE-OS 32 46 072) sowie mit Isocyanat blockierte Imidazole beschrieben. Beide Verbindungstypen müssen sehr aufwendig durch Umsetzung mit speziellen Säurechloriden (unter HCl-Freisetzung) bzw. mit Isocyanaten produziert werden.

Wesentlich kostengünstiger können Imidazole bspw. gemäß GB-PS 10 50 679 hergestellt werden, doch besitzen sie nur eine begrenzte Wirksamkeit bzw. Lagerstabilität. Schließlich wurden gemäß der US 3 356 645 spezielle Imidazol-Salze als Härter offenbart, welche aus Imidazolen und Monocarbonsäuren mit 1 bis 8 C-Atomen wie z.B. Essigsäure, Milchsäure usw. gebildet wurden. Diese Salze sind flüssig und verändern beim längeren Lagern ihre Farbe (Dunkelfärbung, oxidative Zersetzung).

Der Erfindung liegt daher die Aufgabe zugrunde, ein Additiv für hitzehärtbare Epoxidharzmassen zu schaffen, welches die genannten Nachteile des Standes der Technik nicht aufweist, einfach herstellbar ist und einer Epoxidharz-Härter-Mischung eine gute Lagerstabilität verleiht.

Diese Aufgabe wird erfindungsgemäß gelöst durch ein Additiv für hitzehärtbare Epoxidharzmassen, welches dadurch gekennzeichnet ist, daß es ein Addukt und/oder Umsetzungsprodukt aus (a) einem Imidazol der Formel I

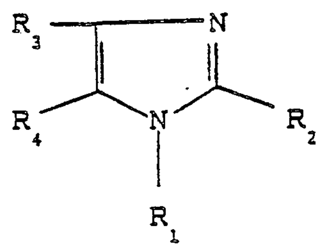

(I)

mit $R_1$, $R_2$, $R_3$ oder $R_4$ = H, Alkyl, Alkenyl, Alkinyl mit 1 bis 3 C-Atomen, Phenyl, und (b)mindestens einer aromatischen Hydroxysäure enthält oder daraus besteht.

Es hat sich nämlich überraschenderweise gezeigt, daß mit Hilfe des erfindungsgemäßen Additivs die Lagerstabilität der Epoxidharz-Härter-Mischungen entscheidend verlängert wird im Vergleich zu bekannten Additiven.

Außerdem wurde festgestellt, daß das erfindungsgemäße Additiv ein sehr schnelles Einsetzen der Härtung bei höheren Temperaturen bewirkt, was ebenfalls nicht vorhersehbar war.

Das Additiv der Erfindung besteht aus einem Addukt und/oder Umsetzungsprodukt eines bestimmten Imidazolderivats und einer aromatischen Hydroxysäure. Unter Addukt sind im Rahmen der Erfindung locker gebundene Anlagerungsprodukte zu verstehen, während als Umsetzungsprodukte insbesondere die Salze der jeweiligen Imidazol-Derivate mit den entsprechenden Hydroxysäuren anzusehen sind.

Die erfindungsgemäß einsetzbaren Imidazol-Derivate können unsubstituiert oder ggf. in 1-, 2-, 4- und/oder 5-Stellung substituiert sein. Als Substituenten kommen hierbei insbesondere Alkylreste mit 1 bis 3 C-Atomen in der Hauptkette, deren ungesättigte Analoge sowie Phenylreste in Frage. Beispiele für geeignete gesättigte Alkylreste sind Methyl-, Äthyl- oder n-Propylreste, für ungesättigte Vinyl- oder Allylreste, für verzweigte Isopropylreste.

Die Alkylreste, deren ungesättigte Analoge und die Phenylreste der substituierten Imidazole können ihrerseits ebenfalls noch substituiert sein, wobei als Substituenten für die Alkylreste und deren ungesättigte analoge CN-, OH-, $OCH_3$-sowie Phenyl- oder aromatische Substituenten in Frage kommen. Beispiele für solche substituierten Alkylreste sind 2-Cyanethyl-, 2-Hydroxyethyl-, 2-Methoxyethyl-, Benzyl- oder 2-(3,5-Diamino-s-triazinyl)ethyl-Reste.

Die Phenylreste in der 1-, 2-, 4- oder 5-Position des Imidazols können ebenfalls substituiert sein, wobei die Substituenten OH-, $OCH_3$-, $NH_2$-, Halogen- oder CN-Gruppen sein können.

Die zur Herstellung des erfindungsgemäßen Additivs verwendbaren Imidazole sind bekannt und zum Teil im Handel erhältlich oder können nach den üblichen Verfahren sehr einfach hergestellt werden.

Als zweite Komponente enthält das erfindungsgemäße Additiv aromatische Hydroxysäuren, wobei hierunter solche aromatischen Verbindungen zu verstehen sind, die mindestens eine Hydroxy- und mindestens eine Säurefunktion aufweisen. Als aromatische Systeme werden hierbei die Phenyl- und Naphthyl-Aromaten und als Säurefunktion die Carbonsäure und Sulfonsäure bevorzugt. Beispiele für solche Verbindungen sind Phenolcarbonsäuren, Phenolsulfonsäuren, Naphtholcarbonsäuren sowie Naphtholsulfonsäuren. Außer einer oder mehrerer Hydroxyl- und Säurengruppe(n) können die aromatischen Hydroxysäuren noch weitere Substituenten tragen, wobei $NO_2$, $NH_2$, Halogen, $OCH_3$, $OC_2H_5$ oder Alkyl mit 1 bis 3 C-Atomen bevorzugt sind. Der $C_1$-$C_3$-Alkylrest kann hierbei ebenfalls noch substituiert sein, vorzugsweise durch einen Phenylrest, der ggf. noch weitere Substituenten, insbesondere Hydroxyl-, Carboxyl- oder Sulfonsäuregruppen, aufweist. Hierunter fallen bspw. Di-hydroxyaromatische Carbonsäuren, die über einen Methylenrest miteinander verbunden sind, wie z.B. Methylendisalicylsäure. Wegen der guten Verfügbarkeit werden Salicylsäure, Gallussäure und p-Phenolsulfonsäure besonders bevorzugt.

Das Molverhältnis der Komponenten (a) und (b) kann in weiten Grenzen variiert werden. Bevorzugt werden Molverhältnisse von Imidazolderivat zu Säuregruppe der aromatischen Hydroxysäure von 2 : 1 bis 1 : 2,5, insbesondere 1 : 0,6 bis 1 : 1,2.

Die Herstellung des erfindungsgemäßen Additivs aus den Komponenten (a) und (b) kann auf verschiedenen Wegen erfolgen, wobei die folgenden Varianten I bis III technisch besonders einfach und kostengünstig sind.

Variante I:

Inniges Vermischen der Komponenten im festen Zustand und ggf. nachfolgende Vermahlung.

Variante II:

Vermischen der Komponenten, Erhitzen bis zur Schmelze und ggf. Zerkleinerung nach der Abkühlung.

Variante III:

Auflösen der Komponenten in geeigneten Lösemitteln wie Wasser, Alkoholen (wie z.B. Methanol oder Ethanol), DMF, Ketonen usw. in der Wärme und Auskristallisation des Produktes (bspw. in Form des Salzes) in der Kälte.

Das erfindungsgemäße Additiv weist vorteilhafte Eigenschaften als Härter oder Beschleuniger für Epoxidharzmassen aus. Als Epoxidharze kommen hierbei alle Produkte in Frage, welche im Mittel mehr als eine 1,2-Epoxidgruppe aufweisen und gesättigt oder ungesättigt, aliphatisch, cycloaliphatisch,aromatisch oder heterocyclisch sein können und evtl. Substituenten wie Halogene, Phosphor und Hydroxylgruppen etc. enthalten.

Besonders geeignet sind Epoxidharze auf Basis Glycidylpolyether von 2,2-Bis(4-hydroxyphenyl)propan (Bisphenol A) sowie das mit Brom substituierte Derivat (Tetrabrombisphenol A), Glycidylpolyether von 2,2-Bis(4-hydroxyphenyl)methan (Bisphenol F) und Glycidylether von Novolackharzen.

Wird das erfindungsgemäße Additiv als Härter eingesetzt, so reichen üblicherweise Mengen von 1 bis 15 Gew.-% bezogen auf das Gewicht des Epoxidharzes aus, um eine optimale Wirkung zu erzielen.

Das erfindungsgemäße Additiv kann nicht nur als Härter, sondern auch als Beschleuniger in Kombination mit anderen latenten Härtern angewendet werden, wobei die Menge des Beschleunigers vorzugsweise 0,1 bis 1,5 Gew.-% bezogen auf das Gewicht des Epoxidharzes beträgt. Die mit dem erfindungsgemäßen Additiv (Beschleuniger) kombinierbaren latenten Härter sind bekannt und teilweise im Handel erhältlich.

Bevorzugt sind als kombinierbare latente Härter solche, die Amino-, Imino-, Amido-, Imido-, Triazin- oder Hydrazidgruppen enthalten. Geeignet sind z.B. Bortrichlorid/Amin- und Bortrifluorid/Amin-Komplexe, Dicyandiamid, Aminotriazine wie Melamin oder Diallylmelamin, und Guanamine wie z.B. Acetoguanamin oder Benzoguanamin, Aminotriazole wie z.B. 3-Amino1,2,4-triazol, Carbonsäurehydrazide wie Adipinmono-oder-dihydrazid, Stearinhydrazid und Isophthalmono- oder -dihydrazid, Semicarbazid, Cyanoacetamid und aromatische Polyamine wie Diaminodiphenylsulfon. Besonders bevorzugt werden Dicyandiamid, Isophthalsäuredihydrazid, Adipinsäuredihydrazid in Kombination mit dem Additiv der Erfindung verwendet.

Je nach Anwendungsfall kann das erfindungsgemäße Additiv in ein flüssiges oder aufgeschmolzenes Epoxidharz eingemischt und suspendiert werden oder in gelöster Form in das Epoxidharz oder in eine Lösung desselben eingebracht werden. Als Lösemittel können grundsätzlich alle Flüssigkeiten verwendet werden, in denen sich das Epoxidharz, der Härter und ggf. der Beschleuniger in ausreichendem Umfang auflösen. Beispiele für geeignete Lösemittel sind verschiedene Glykolether wie Ethylengklykol- oder Propylenglykolmonomethylether sowie Ester davon, aber auch Ketone wie Aceton oder DMF etc.

Das erfindungsgemäße Additiv wird zweckmäßigerweise in möglichst feinverteilter Form eingesetzt, um

eine gleichmäßige Verteilung und eine optimale Wirkung zu erzielen. Die Teilchengröße sollte deshalb vorzugsweise < 150 µm betragen.

Die Epoxidhärtung mit Hilfe des erfindungsgemäßen Additivs erfolgt bei Temperaturen von 100 bis 200 °C, vorzugsweise bei 130 bis 180 °C, wobei ein sehr schnelles Einsetzen der Härtung erfolgt.

Dies ist ein weiterer Vorteil des erfindungsgemäßen Additivs neben der kostengünstigen Herstellung des Additivs sowie der guten Lagerstabilität der Epoxidharz-Härter-Mischungen, die das Additiv enthalten.

Die nachfolgenden Beispiele erläutern die Erfindung näher.

Beispiel 1

Herstellung erfindungsgemäßer Additive:

Additiv 1

82 g 2-Methylimidazol werden mit 138 g Salicylsäure innig vermischt und mit einer Stiftmühle gemahlen.
(Molverhältnis der Komponenten 1 : 1, Teilchengröße < 80 µm).

Additiv 2

35 g 2-Methylimidazol werden mit 65 g Salicylsäure innig vermischt und das enthaltene Gemisch ungemahlen verwendet.
(Molverhältnis der Komponenten 1 : 1,1, Teilchengröße < 150 µm).

Additiv 3

350 g 2-Methylimidazol und 650 g Salicylsäure (Molverhältnis 1 : 1,04) werden bei 45 °C in 2 l Wasser gelöst. Nach Abkühlung auf 10 °C wird das ausgefallene Salz abzentrifugiert und mit wenig Wasser gewaschen. Die Mutterlauge wird wiederum als Lösemittel eingesetzt. Das Produkt, welches aus dem Lösemittel Wasser nach dreimaliger Verwendung in nahezu quantitativer Ausbeute auskristallisiert und ein Mol Kristallwasser enthält, wird eingesetzt.
(Teilchengröße < 120 µm).

Additiv 4

17,9 g 2-Methylimidazol werden zu 50,0 g einer 65 Gew.-%igen p-Phenolsulfonsäurelösung in Wasser gegeben und eingerührt. Das enthaltene Wasser wird im Vakuum abdestilliert und das erhaltene Produkt über Silicagel im Exsikkator getrocknet.
Das Produkt mit Schmelzpunkt > 48 °C und Teilchengröße < 120 m wird eingesetzt.

Additive 5 - 14

Allgemeine Vorschrift

Das Imidazol bzw. Imidazolderivat wird in 100 ml Wasser aufgelöst, die aromatische Hydroxysäure zugegeben und bei 60 ° C 1 Stunde lang gerührt. Das Wasser wird dann im Vakuum abgezogen und das Produkt (Teilchengröße < 120 µm) im Vakuum bei 60 °C ca. 14 Stunden getrocknet, wobei folgende Mengen als Ausgangsverbindungen eingesetzt wurden:

| Additiv | Imidazol-derivat | aromat. Hydroxysäure | Molver-hältnis |
|---|---|---|---|
| 5 | 8,85 g 2-MI | 21,15 g 4-Hydroxy-3-nitrobenzoesäure (98 %ig) | 1 : 1,05 |
| 6 | 8,39 g 2-MI | 21,61 g 5-Sulfo-salicylsäure (98 %ig) | 1 : 1,90 |
| 7 | 11,10 g 2-MI | 18,9 g Sulfanilsäure (99 %ig) | 1 : 0,80 |
| 8 | 5,52 g 2-MI | 24,38 g 2-Amino-4-sulfobenzoesäure (64 %ig) | 1 : 2,10 |
| 9 | 8,70 g 2-MI | 21,3 g 2-Aminophenol-4-sulfonsäure (89 %ig) | 1 : 0,95 |
| 10 | 10,70 g 2-MI | 19,3 g Gallussäure hydrat (98 %ig) | 1 : 0,85 |

| | | | |
|---|---|---|---|
| 11 | 14,00 g 1-MI | 25,9 g Salicylsäure | 1 : 1,10 |
| 12 | 14,6 g 1-HEI | 16,2 g Salicylsäure | 1 : 0,90 |
| 13 | 14,3 g 2,4-EMI | 13,5 g Gallussäure-hydrat (98 %ig) | 1 : 0,06 |
| 14 | 14,0 g 2-PHI | 13,5 g Gallussäure-hydrat (98 %ig) | 1 : 0,80 |

Legende:

2-MI: 2-Methylimidazol
1-MI: 1-Methylimidazol
1-HEI: 1-(2-Hydroxyethyl)imidazol
2,4-EMI: 2-Ethyl-4-methylimidazol
2-PHI: 2-Phenylimidazol

Beispiel 2

Es wird die Lagerstabilität der erfindungsgemäßen Additive 1 bis 10 entsprechend Beispiel 1 in Epoxidharzmassen untersucht im Vergleich zu folgenden Additiven 15 bis 17 entsprechend dem Stand der Technik:

Additiv Nr. 15:

2-Methylimidazol (TeilchengröBe ca. 80 mm) (Vergleich)

Additiv Nr. 16:

Innige Mischung von 2-Methylimidazol und Bernsteinsäure (Molverhältnis 1 : 1,04, Teilchengröße ca. 80 µm) (Vergleich)

Additiv Nr. 17:

Umsetzungsprodukt von 2-Methylimidazol mit Milchsäure entsprechend der US 3 356 645 (Molverhältnis 1 : 1,75, flüssig) (Vergleich)

Zur Bestimmung der Lagerstabilität werden in 10 g flüssigem Epoxidharz (Epikote 828) jeweils 3 Gew.-% der Additive dispergiert und bei 40 °C gelagert. In Abständen von jeweils 24 Stunden werden die Viskositäten bei 25 °C bestimmt (Haake-Rotationsviskosimeter RV 2/PK). Hierbei wurden folgende Ergebnisse erhalten:

| | Viskosität in Pa·s | | | |
|---|---|---|---|---|
| Additiv | 0 d | 1 d | 2 d | 3 d |
| Nr. 1 (E) | 12,9 | 25,0 | 40,1 | 84,0 |
| Nr. 2 (E) | 13,8 | 15,9 | 20,3 | 24,4 |
| Nr. 3 (E) | 14,5 | 22,9 | 35,5 | 61,7 |
| Nr. 4 (E) | 13,1 | 14,5 | 17,8 | 21,8 |
| Nr. 5 (E) | 15,0 | 29,5 | 43,9 | 81,1 |
| Nr. 6 (E) | 15,0 | 14,8 | 15,5 | 15,8 |
| Nr. 7 (E) | 14,5 | 19,0 | 23,0 | 30,0 |
| Nr. 8 (E) | 14,3 | 14,2 | 14,6 | 14,2 |
| Nr. 9 (E) | 13,0 | 14,7 | 15,5 | 15,5 |
| Nr. 10 (E) | 14,5 | 15,9 | 21,1 | 31,3 |
| Nr. 15 (V) | 12,1 | fest | - | - |
| Nr. 16 (V) | 13,8 | 26,2 | fest | - |
| Nr. 17 (V) | 12,5 | 72,3 | fest | - |
| E = Erfindung<br>V = Vergleich | | | | |

Beispiel 3

Es wird die Wirkung des erfindungsgemäßen Additivs Nr. 1 entsprechend Beispiel 1 als Beschleuniger im Vergleich zu 2-Methylimidazol (Additiv Nr. 15 entsprechend Beispiel 2) untersucht. Hierzu wird eine Epoxidharzlösung (Rütapox 2040 MEK 75) mit 30 Gew.-% einer 10 %igen Dicyandiamidlösung in Methylglykol und jeweils 0,1 Gew.-% des Additivs Nr. 1 (E) und Nr. 15 (V) zu einer klaren Lösung vermischt (Gew.-% jeweils bezogen auf Menge an Epoxidharz). Diese Lösungen werden in dünner Schicht gehärtet (1 Stunde bei 130 °C, 1 Stunde bei 170 °C) und in einer DSC-Apparatur die Tg-Werte der beiden gehärteten Harze bestimmt.

Die Tg-Werte bei Verwendung der Additive Nr. 1 bzw. Nr. 15 stimmen im Rahmen der Genauigkeit (+/- 1 °C) überein. Wie man sieht, ist die härtende Wirkung des erfindungsgemäßen Additivs mit derjenigen von 2-Methylimidazol vergleichbar.

**Ansprüche**

1. Additiv für hitzehärtbare Epoxidharzmassen, dadurch gekennzeichnet, daß man Addukte und/oder Umsetzungsprodukte aus (a) Imidazolen der Formel I

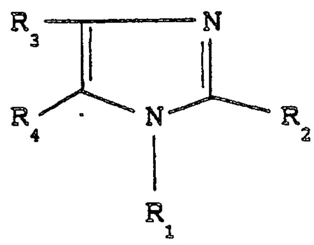

(I)

mit $R_1$, $R_2$, $R_3$ oder $R_4$ = H, Alkyl mit 1 bis 3 C-Atomen, Phenyl
und (b) mindestens einer aromatischen Hydroxysäure enthält oder daraus besteht.

2. Additiv nach Anspruch 1, dadurch gekennzeichnet, daß der Alkylrest des Imidazols ungesättigt ist.

3. Additiv nach den Ansprüchen 1 und 2, dadurch gekennzeichnet, daß der Alkyl- und/oder Phenylrest substituiert ist.

4. Additiv nach Anspruch 3, dadurch gekennzeichnet, daß der oder die Substituent(en) für den Alkylrest CN, OH, $OCH_3$, Phenyl oder ein heterocyclischer Aromat ist.

5. Additiv nach Anspruch 3, dadurch gekennzeichnet, daß der oder die Substituent(en) für den Phenylrest OH, $OCH_3$, $NH_2$, Halogen oder CN ist.

6. Additiv nach einem der Ansprüche 1 bis 4, **dadurch gekennzeichnet,** daß es als aromatische Hydroxysäure eine Phenol- oder Naphtholsulfonsäure enthält.

7. Additiv nach einem der Ansprüche 1 bis 6, **dadurch gekennzeichnet,** daß die aromatische Hydroxysäure durch weitere Reste ausgewählt aus der Gruppe $NO_2$, $NH_2$, Halogen, $OCH_3$, $OC_2H_5$ oder Alkyl mit 1 bis 3 C-Atomen substituiert ist.

8. Additiv nach Anspruch 7, **dadurch gekennzeichnet,** daß der $C_1$-$C_3$-Alkylrest der aromatischen Hydroxysäure durch einen Phenylrest substituiert ist, der ggf. noch weitere Substituenten, insbesondere Hydroxyl-, Carboxyl- oder Sulfonsäuregruppen, besitzt.

9. Additiv nach einem der Ansprüche 1 bis 8, **dadurch gekennzeichnet,** daß es als Phenolcarbonsäure Salicylsäure enthält.

10. Additiv nach den Ansprüchen 1 bis 8, **dadurch gekennzeichnet,** daß es als Phenolcarbonsäure Gallussäure enthält.

11. Additiv nach den Ansprüchen 1 bis 8, **dadurch gekennzeichnet,** daß es als Phenolsulfonsäure p-Phenolsulfonsäure enthält.

12. Additiv nach einem der Ansprüche 1 bis 11, **dadurch gekennzeichnet,** daß das Molverhältnis Imidazolderivat zu Säuregruppe der aromatischen Hydroxysäure 2 : 1 bis 1 : 2,5, insbesondere 1 : 0,6 bis 1 : 1,2 beträgt.

13. Verfahren zur Herstellung des Additivs nach den Ansprüchen 1 bis 12, **dadurch gekennzeichnet,** daß man die Komponenten im festen Zustand innig vermischt und ggf. nachfolgend vermahlt.

14. Verfahren zur Herstellung des Additivs nach den Ansprüchen 1 bis 12, **dadurch gekennzeichnet,** daß man die Komponenten vermischt, bis zur Schmelze erhitzt und nach der Abkühlung ggf. zerkleinert.

15. Verfahren zur Herstellung des Additivs nach den Ansprüchen 1 bis 12, **dadurch gekennzeichnet,** daß man die Komponenten in einem geeigneten Lösemittel in der Wärme auflöst und das Produkt in der Kälte auskristallisieren läßt.

16. Verwendung des Additivs nach den Ansprüchen 1 bis 12 als Härter für Epoxidharzmassen.

17. Verwendung nach Anspruch 16, **dadurch gekennzeichnet,** daß man den Härter in einer Menge von 1 bis 15 Gew.-% bezogen auf das Gewicht des Epoxidharzes einsetzt.

18. Verwendung des Additivs nach den Ansprüchen 1 bis 12 als Beschleuniger für die Epoxidharzhärtung in Kombination mit anderen latenten Härtern.

19. Verwendung nach Anspruch 18, **dadurch gekennzeichnet,** daß die Menge des Additivs als Beschleuniger 0,1 bis 1,5 Gew.-% bezogen auf das Gewicht des Epoxidharzes beträgt.

20. Verwendung nach den Ansprüchen 18 und 19 in Kombination mit Dicyandiamid, Isophthalsäuredihydrazid oder Adipinsäuredihydrazid als latentem Härter.

21. Verwendung nach den Ansprüchen 16 bis 20, **dadurch gekennzeichnet,** daß das Additiv eine Teilchengröße < 150 µm aufweist.